# EUROPÄISCHE PATENTSCHRIFT

(11) **EP 0 896 848 B1**
(45) Veröffentlichungstag und Bekanntmachung des Hinweises auf die Patenterteilung: **14.08.2002**
(21) Anmeldenummer: 98110387.2
(22) Anmeldetag: 06.06.1998
(51) Int. Cl.: B23D 61/06

(54) **Sägeblatt mit Schneideinsatzspanneinrichtung**
Saw blade with insert clamping device
Lame de scie à dispositif de serrage de la plaquette de coupe

(30) Priorität: 13.08.1997 DE 19735143
(43) Veröffentlichungstag der Anmeldung: 17.02.1999
(73) Patentinhaber: ARNTZ GmbH & Co. KG, 42855 Remscheid (DE)
(72) Erfinder: Arntz, Jan Wilhelm Dipl. Ing., 42853 Remscheid (DE); Huelmann, Erich Ing. grad., 42853 Remscheid (DE)
(74) Vertreter: Patentanwälte Dr. Solf & Zapf

(56) Entgegenhaltungen:
- EP-A- 0 665 075
- WO-A-96/36452
- DE-A- 3 416 712
- DE-U- 7 415 774
- GB-A- 929 530
- US-A- 4 706 534

## Beschreibung

Die Erfindung betrifft ein Sägeblatt zum Trennen von Stahl, NE-Metallen oder Holz und Kunststoffen mit am Umfang angeordneten Schneideinsätzen.

Bekannte Sägeblätter weisen ein kreisförmiges Stammblatt mit am Umfang ausgebildeten Sägezähnen auf. Die Sägezähne sind aus einer einteilig am Stammblatt angeformten Sägezahnbasis und einem darauf unlösbar, beispielsweise durch Löten oder Schweißen befestigten Schneideinsatz ausgebildet. Bei Schneideinsatzbeschädigungen, wie z. B. Ausbrüchen, ist es notwendig, den alten, zerstörten Scheideinsatz abzulöten, die Lötfläche zu säubern, einen neuen Schneideinsatz aufzulöten und dessen Geometrie zuzuschleifen. Hierzu sind umfangreiche Spezialmaschinen erforderlich und das Austauschen eines Schneideinsatzes verursacht einen erheblichen Arbeitsaufwand.

Aus der US 4,563,929 geht ein Sägeblatt zum Sägen von Holz hervor, das einen extrem rauhen und großen Umfang aufweist und aus einem Stammblatt, mit peripher angeordneten Segmenten besteht.

Beidseitig vom Stammblatt sind etwa kreissegmentförmige Segmentplättchen angeordnet, die zwischen sich einen umlaufenden, nach radial außen offenen Zwischenraum begrenzen. An den Segmentplättchen sind radial verlaufende Schultern ausgebildet, an welche die Schneidzähne angesetzt sind. Die Schneidzähne erstrecken sich mit ihrem Schneidzahnkörper in den Zwischenraum zwischen den Segmentplättchen und sind mittels einer oder zwei Schrauben an den Segmentplättchen befestigt. Die Segmentplättchen sind mittels weiterer Schrauben am Stammblatt fixiert. Die Schraubverbindung zwischen dem Stammblatt und den Segmentplättchen bzw. zwischen den Segmentplättchen und den Sägezähnen erlaubt ein Zerlegen und Reparieren bzw. Austauschen einzelner Sägezähne und Segmentplättchen unmittelbar am Einsatzrohr der Säge.

Eine derart aufwendige Konstruktion mit beidseitig vom Stammblatt angeordneten Segmentplättchen ist nur für extrem große Sägeblätter mit einem Durchmesser von z. B. einem Meter oder größer geeignet. Bei kleineren Sägeblättern würde sich wegen des mehrlagigen Aufbaus eine zu große Dicke um Umfangsbereich des Sägeblattes ergeben, die eine entsprechend breite Sägenut erzeugen würde.

Aus der DE GM 7415774 ist ein Kreissägenblatt, insbesondere für Stahl- und ME-Metalle bekannt, bei dem Einzelschneideinsätze in entsprechenden Radialausnehmungen des Stammblatts sitzen. Die Ausnehmungen weisen eine in Drehrichtung voreilende Lagerfläche und eine nacheilende Rückengegenfläche auf, wobei der Schneideinsatz mittels einer Spanneinrichtung gegen die voreilende Lagerfläche gedrückt ist.

Ein derartiges Sägeblatt weist eine relativ hohe Verschleißneigung insbesondere bei stoßartiger Belastung der Schneideinsätze auf. Außerdem ist der Ersatz der Schneideinsätze umständlich zu bewerkstelligen.

Der Erfindung liegt die Aufgabe zugrunde, ein Sägeblatt zu schaffen, das einfach und kostengünstig ausgebildet ist, eine hohe Festigkeit aufweist, deren Sägezähne über eine lange Lebensdauer einer hohen Sägebelastung standhalten können und das einfach und schnell repariert werden kann.

Die Aufgabe wird durch ein Sägeblatt mit den Merkmalen des Anspruchs 1 gelöst. Vorteilhafte Ausgestaltungen sind in den Unteransprüchen gekennzeichnet.

Das erfindungsgemäße Sägeblatt weist ein Stammblatt mit an der Peripherie angeordneten Sägezähnen auf. Die Sägezähne sind jeweils aus einer Sägezahnbasis und einem Schneideinsatz ausgebildet, der in einer Ausnehmung der Sägezahnbasis sitzt. Der Schneideinsatz weist eine in Drehrichtung voreilend angeordnete Brustfläche und eine in Drehrichtung nacheilend angeordnete Rückenfläche auf.

In den Ausnehmungen sind jeweils eine in Drehrichtung voreilende Lagerfläche und eine nacheilende Rückengegenfläche ausgebildet. Die Schneideinsätze passen etwa formschlüssig in die Ausnehmungen, wobei im Bereich der Rückenfläche und Rückengegenfläche eine Spanneinrichtung vorgesehen ist, mit welcher der Schneideinsatz in Drehrichtung des Sägeblatts mit einem vorbestimmten Druck beaufschlagt ist. Die Brustfläche des Schneideinsatzes liegt somit unter Druck an der Lagerfläche an und vorzugsweise ist zwischen der Rückenfläche und der Rückengegenfläche ein schmaler Spalt ausgebildet. Dieser Vorspanndruck dient der Kompensation der im Einsatz auftretenden Schnittkräfte auf das Sägeblatt.

Es hat sich gezeigt, daß die zweistückige Ausbildung der Sägezähne bestehend aus der Sägezahnbasis und dem Schneideinsatz den beim Sägen auftretenden Stoßbelastungen sehr gut widerstehen kann und Ausbrüche der Zähne bzw. Zahnflanken auch bei langer Benutzungsdauer des Sägeblattes sehr selten auftreten.

Das Vorsehen eines Spaltes erlaubt insbesondere eine gewisse Nachgiebigkeit des Schneideinsatzes in der Ausnehmung der Sägezahnbasis, so daß eine auf den Schneideinsatz wirkende Stoßbelastung durch eine Biege- bzw. Kippbewegung des Schneideinsatzes gedämpft auf die Sägezahnbasis übertragen und die Belastung räumlich verteilt in die Sägezahnbasis eingeleitet wird. Die Stoßbelastungen werden zudem teilweise in Festkörperreibung umgewandelt und dadurch erheblich-verringert. Dies führt zu einer überraschend hohen Standfestigkeit des erfindungsgemäßen Sägeblatts.

Die Erfindung wird nachfolgend beispielhaft anhand der Zeichnung näher erläutert. Es zeigen:
- Fig. 1a: ein erstes Ausführungsbeispiel eines erfindungsgemäßen Sägeblatts im Bereich eines Sägezahns in der Seitenansicht im Teilschnitt;
- Fig. 1b: das in Fig. 1a gezeigte Sägeblatt im Bereich eines Sägezahns in der Draufsicht;
- Fig. 1c - 1e: einen Schneideinsatz des in Fig. 1a gezeigten Sägeblatts im Querschnitt, in der Rückansicht und in der Draufsicht;
- Fig. 2a: ein zweites Ausführungsbeispiel des erfindungsgemäßen Sägeblatts im Bereich eines Sägezahns in der Seitenansicht;
- Fig. 2b: das Sägeblatt aus Fig. 2a im Bereich eines Sägezahns in der Draufsicht;
- Fig. 2c - 2e: einen Schneideinsatz des in Fig. 2a gezeigten Sägeblatts im Querschnitt, in der Rückansicht und in der Draufsicht;
- Fig. 3a: ein drittes Ausführungsbeispiel des erfindungsgemäßen Sägeblatts im Bereich eines Sägezahns in der Seitenansicht;
- Fig. 3b: das Sägeblatt aus Fig. 3a im Bereich eines Sägezahns in der Draufsicht;
- Fig. 3c - 3e: einen Schneideinsatz des in Fig. 3a gezeigten Sägeblatts im Querschnitt, in der Rückansicht und in der Draufsicht;
- Fig. 4a: ein viertes Ausführungsbeispiel des erfindungsgemäßen Sägeblatts im Bereich eines Sägezahns in der Seitenansicht;
- Fig. 4b: das Sägeblatt aus Fig. 4a im Bereich eines Sägezahns in der Draufsicht;
- Fig. 4c - 4e: einen Schneideinsatz des in Fig. 4a gezeigten Sägeblatts im Querschnitt, in der Rückansicht und in der Draufsicht;

- Fig. 5a: ein fünftes Ausführungsbeispiel des erfindungsgemäßen Sägeblatts im Bereich eines Sägezahns in der Seitenansicht;
- Fig. 5b: das Sägeblatt aus Fig. 5a im Bereich eines Sägezahns in der Draufsicht;
- Fig. 5c - 5e: einen Schneideinsatz des in Fig. 5a gezeigten Sägeblatts im Querschnitt, in der Rückansicht und in der Draufsicht;
- Fig. 6a: ein sechstes Ausführungsbeispiel des erfindungsgemäßen Sägeblatts im Bereich eines Sägezahns in der Seitenansicht;
- Fig. 6b: das Sägeblatt aus Fig. 6a im Bereich eines Sägezahns in der Draufsicht;

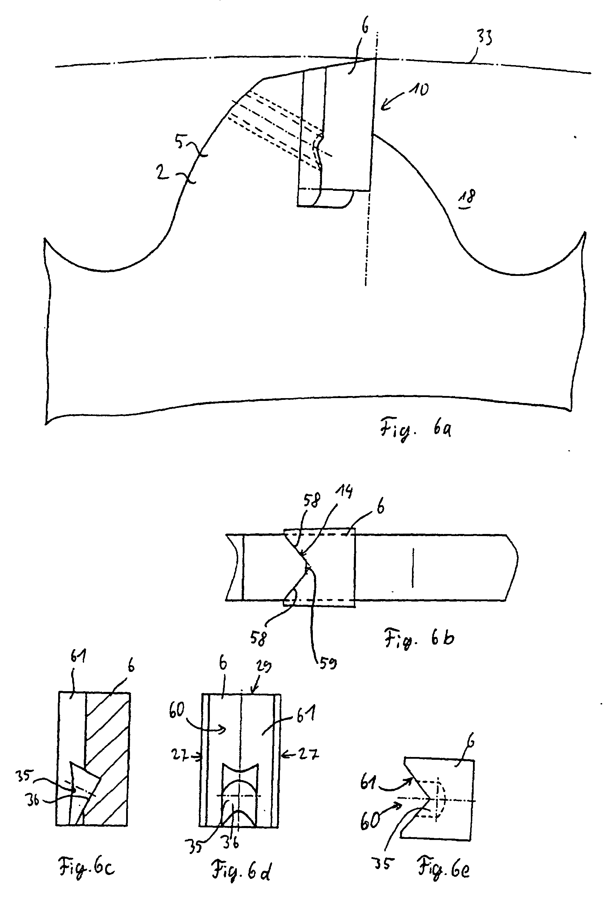

- Fig. 6c - 6e: einen Schneideinsatz des in Fig. 6a gezeigten Sägeblatts im Querschnitt, in der Rückansicht und in der Draufsicht;
- Fig. 7a: ein siebtes Ausführungsbeispiel des erfindungsgemäßen Sägeblatts im Bereich eines Sägezahns in der Seitenansicht;
- Fig. 7b: das Sägeblatt aus Fig. 7a im Bereich eines Sägezahns in der Draufsicht;
- Fig. 7c - 7e: einen Schneideinsatz des in Fig. 7a gezeigten Sägeblatts im Querschnitt, in der Rückansicht und in der Draufsicht;

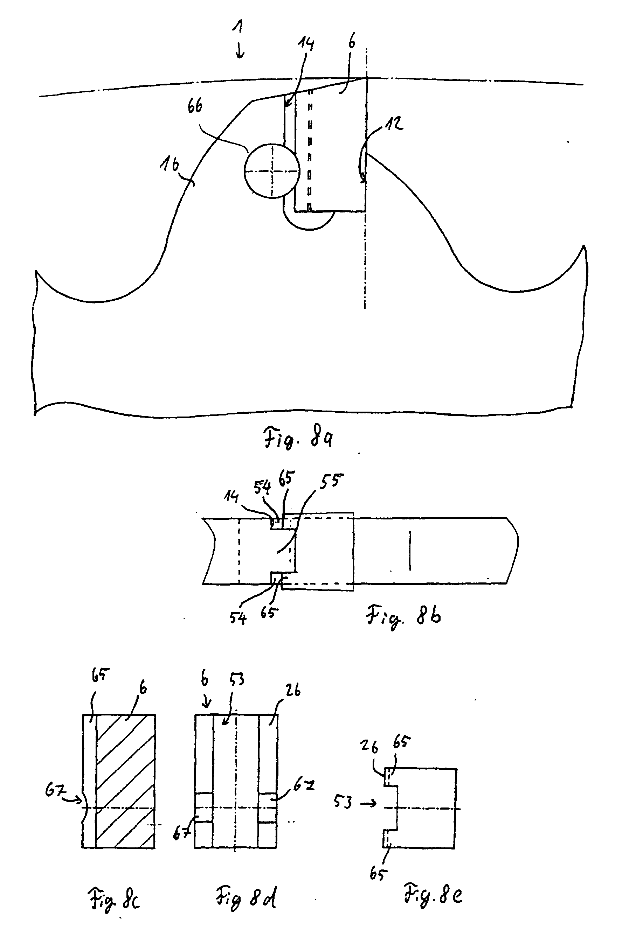

- Fig. 8a: ein achtes Ausführungsbeispiel des erfindungsgemäßen Sägeblatts im Bereich eines Sägezahns in der Seitenansicht;

- Fig. 8b: das Sägeblatt aus Fig. 8a im Bereich eines Sägezahns in der Draufsicht; und
- Fig. 8c - 8e: einen Schneideinsatz des in Fig. 8a gezeigten Sägeblatts im Querschnitt, in der Rückansicht und in der Draufsicht.

Ein erstes Ausführungsbeispiel des erfindungsgemäßen Sägeblatts ist in den Fig. 1a bis 1e dargestellt.

Das Sägeblatt 1 weist ein etwa kreisförmiges Stammblatt 2 auf, an dem an der Peripherie radial nach außen vorstehendes Sägezähne 3 angeordnet sind. Die Sägezähne 3 sind jeweils aus einer Sägezahnbasis 5 und einem Schneideinsatz 6 ausgebildet.

Die Sägezahnbasis 5 ist einteilig am Stammblatt 2 radial nach außen vorstehend angeformt und besitzt in der Seitenansicht etwa die Form eines konvex gewölbten Höckers.

In der Sägezahnbasis 5 ist in der der Drehrichtung 8 des Sägeblatts 1 voreilenden Hälfte der Basis 5 eine in der Seitenansicht U-förmige nutartige Ausnehmung 10 mit einer in Drehrichtung 8 voreilenden Lagerfläche 12, einer Bodenfläche 13 und einer nacheilenden Begrenzungsfläche 14, die nachfolgend als Rückengegenfläche 14 bezeichnet wird, ausgebildet.

Die Lagerfläche 12 und die Rückengegenfläche 14 sind am Sägeblatt 1 etwa in Radialrichtung angeordnet und stehen senkrecht auf der Bodenfläche 13. An dem der Rückengegenfläche 14 nacheilenden Bereich bildet die Sägezahnbasis 5 eine Zahnflanke 16 mit einer konvex gewölbten Zahnflankenbegrenzungskante 17.

In der Zahnflanke 16 ist eine sich von der Zahnflankenbegrenzungskante 17 zur Rückengegenfläche 14 erstreckende Gewindebohrung 20 eingebracht. Die Gewindebohrung 20 ist in Drehrichtung 8 nach radial innen geneigt, so daß eine Längsmittenachse 21 der Bohrung 20 mit einer Senkrechten 22 zur Rückengegenfläche 14 einen Winkel α einschließt, der im Bereich von etwa 10° bis 40° und vorzugsweise im Bereich von 20° bis 30° liegt.

An dem von der Lagerfläche 12 voreilenden Bereich ist die Sägezahnbasis 5 zur Ausbildung eines Spanraums 18 weniger weit nach radial außen vorstehend als die Zahnflanke 16 ausgebildet; demgemäß ist die radiale Längserstreckung der Lagerfläche 12 etwa halb so groß wie die radiale Längserstreckung der Rückengegenfläche 14. Der von der Lagerfläche 12 voreilende Bereich weist eine konvex in Drehrichtung 8 nach radial innen gewölbte Spanraumbegrenzungskante 19 auf.

Der Schneideinsatz 6 ist ein etwa quaderförmiger Körper mit einer in Drehrichtung 8 voreilenden Brustfläche 25, einer nacheilenden Rückenfläche 26, zwei Seitenflächen 27, einer Bodenfläche 28 und einem zur Bodenfläche 28 gegenüberliegend angeordneten Schneidrücken 29.

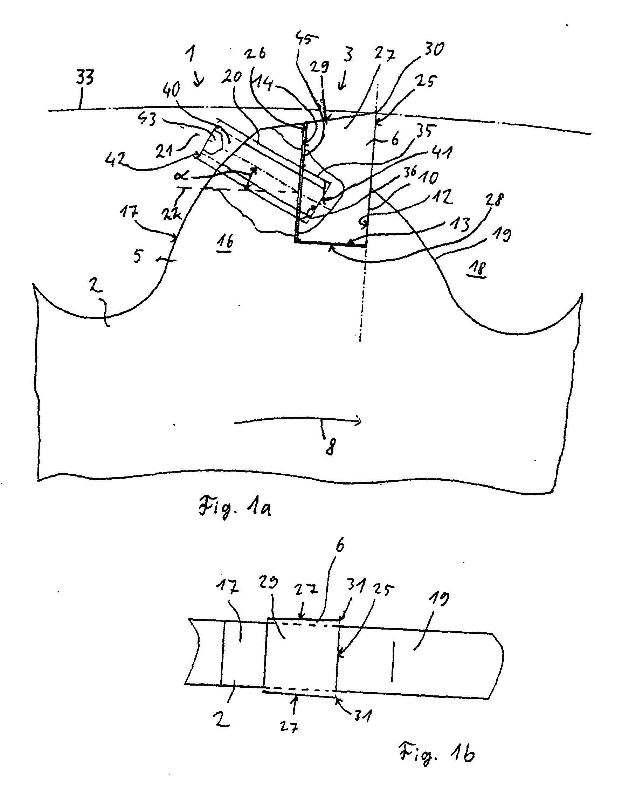

Die Brustfläche 25 ist im Bereich des Schneidrückens 29 und der Seitenflächen 27 hinterschliffen (Fig. 1a, 1b), wobei die Kante zwischen der Brustfläche bzw. Frontfläche 25 und dem Schneidrücken 29 eine Hauptschneide 30 und die Kanten zwischen der Brustfläche 25 und den Seitenflächen 22 Nebenschneiden 31 bilden. Der Schneideinsatz 6 ist in der Ausnehmung 10 der Sägezahnbasis 5 eingesetzt, wobei der Schneideinsatz 6 mit seiner Bodenfläche 28 auf der Bodenfläche 13 der Ausnehmung 10 aufliegt und mit seiner Brustfläche 25 an der Lagerfläche 12 anliegt. Die Hauptschneide 30 steht an der Sägezahnbasis 5 und am Schneideinsatz 6 nach radial außen vor und beschreibt bei der Drehung des Sägeblatts 1 einen Flugkreis 33.

An der Rückenfläche 26 ist gegenüberliegend zur Gewindebohrung 20 eine Aussparung 35 eingebracht (Fig. 1c, 1d). Die Aussparung 35 weist einen ebenflächigen Aussparungsgrund 36 und eine Seitenwandung 37 auf. Der Aussparungsgrund 36 ist etwa senkrecht zur Längsmittenachse 21 der Gewindebohrung 20 angeordnet. Die Seitenwandung 37 ist mit einem halbkreisförmigen Bogen 38 und zwei sich vertikal daran anschließende Flanken 39 ausgebildet.

Zur Fixierung des Schneideinsatzes 6 in der Ausnehmung 10 ist ein Schraubbolzen 40 in die Gewindebohrung 20 eingeschraubt. Der Schraubbolzen 40 weist eine vordere und rückwärtige Stirnfläche 41, 42 auf. In der rückwärtigen Stirnfläche 42 ist eine Ausnehmung 43 zur Ineingriffnahme mit einem Werkzeug eingebracht. Die vordere Stirnfläche 41 liegt am Aussparungsgrund 36 mit einer Vorspannung an. Der Schraubbolzen 40 drückt den Schneideinsatz 6 in Drehrichtung 8 gegen die Lagerfläche 12, so daß der Schneideinsatz 6 mit seiner Brustfläche 25 mit Vorspannung an der Lagerfläche 12 anliegt. Der Schraubbolzen 40 und die Aussparung 36 fungieren somit als Spanneinrichtung, mit welcher der Schneideinsatz 6 in die Ausnehmung 10 der Sägezahnbasis 5 eingespannt ist. Zwischen der Rückenfläche 26 des Schneideinsatzes 6 und der Rückengegenfläche 14 der Sägezahnbasis 5 ist ein durch die Vorspannung, mit welcher der Schneideinsatz 6 in die Ausnehmung 10 eingespannt ist, ein Spalt 45 ausgebildet.

Durch die Neigung des Schraubbolzens 40 um den Winkel α und die korrespondierende Neigung des Aussparungsgrundes 36, der in Drehrichtung 8 ansteigend ausgerichtet ist, wird der Schneideinsatz 6 vom Schraubbolzen 40 auch mit einer radial nach innen wirkenden Kraftkomponente beaufschlagt. Diese nach radial innen wirkende Kraftkomponente drückt die Bodenfläche 28 des Schneideinsatzes 6 gegen die Bodenfläche 13 der Ausnehmung 10. Hierdurch wird der Radialsitz des Schneideinsatzes 6 festgelegt und dieser gegen eine Bewegung in Radialrichtung gesichert.

Beim Sägen mit dem erfindungsgemäßen Sägeblatt 1 wird die auf die Sägezähne 3 wirkende stoßartige Belastung durch den Spalt 45 gedämpft, da die Schneideinsätze ein wenig elastisch nachgebend in den Ausnehmungen 10 fixiert sind.

Der Spalt 45 erlaubt eine gewisse Nachgiebigkeit des Schneideinsatzes 6 in der Ausnehmung 10, so daß eine auf den Schneideinsatz 6 wirkende Stoßbelastung durch eine Biege- bzw. Kippbewegung um den Einspannbereich zwischen der vorderen Stirnfläche 41 des Schraubbolzens 40 und der Lagerfläche 12 gedämpft wird. Die mechanische Belastung wird somit zu Beginn der Stoßbelastung zunächst in den Einspannbereich zwischen der vorderen Stirnfläche 41 und der Lagerfläche 12 und über den Schraubbolzen 40 in die Zahnflanke 16 eingeleitet. Die Belastung wird somit verteilt in das stabil ausgebildete Zentrum der Sägezahnbasis 5 eingebracht. Erst bei einer weitergehenden Beanspruchung des Schneideinsatzes 6 wird dieser gegen die Rückengegenfläche 14 gedrückt, wobei die restliche, verminderte Belastung in den radial äußeren Bereich der Zahnflanke 16 eingeleitet wird.

Diese zweistückige Ausbildung bestehend aus der Sägezahnbasis 5 und dem Schneideinsatz 6 weist eine überraschend hohe Beständigkeit gegenüber Stoßbelastungen auf, woraus eine lange Lebensdauer, selbst bei intensiver Sägezahnbeanspruchung resultiert. Ausbrüche der Zähne bzw. der Zahnflanken sind überaus selten.

Vorzugsweise ist der Schneideinsatz aus Hochleistungsarbeitsstahl, Vergütungsstahl, Hartmetall, Keramik o.ä. ausgebildet und/oder an seiner Oberfläche mit einem Hartstoff, wie z. B. Hartmetall, Diamant, kubischem Bornitrid, Keramik, Hochleistungsschnellarbeitsstahl oder dergleichen beschichtet.

Die Schneideinsätze können z. B. durch eine Wärmebehandlung thermisch vergütet sein. Ferner lassen sich die erfindungsgemäßen Schneideinsätze 6 einfach bei hohen Temperaturen, z. B. mit einem CVD-Verfahren beschichten und am Stammblatt 2 befestigen. Die Austauschbarkeit der Schneideinsätze 6 erlaubt eine Wiederaufbereitung derselben durch Nachschleifen und Wiederbeschichten.

Ein Stammblatt 2 kann zum Schneiden unterschiedlicher Materialien verwendet werden, wobei lediglich die dem jeweiligen zu schneidenden Material angepaßten Schneideinsätze 6 ausgetauscht werden. Hierdurch vereinfacht sich die Lagerhaltung und reduzieren sich die Varianten der notwendigen Sägeblätter.

Die zweiteilige Ausbildung der Sägezähne ergibt auch eine Geräuschminderung, da zwischen dem Schneideinsatz und der Sägezahnbasis eine Festkörperreibung auftritt, die sich mindernd auf die Geräuschentwicklung auswirkt.

Weitere Ausführungsbeispiele der Erfindung werden nachfolgend erläutert. Diese Ausführungsbeispiele weisen im wesentlichen den gleichen Aufbau wie das erste Ausführungsbeispiel auf; demgemäß sind gleiche Teile mit gleichen Bezugszeichen versehen.

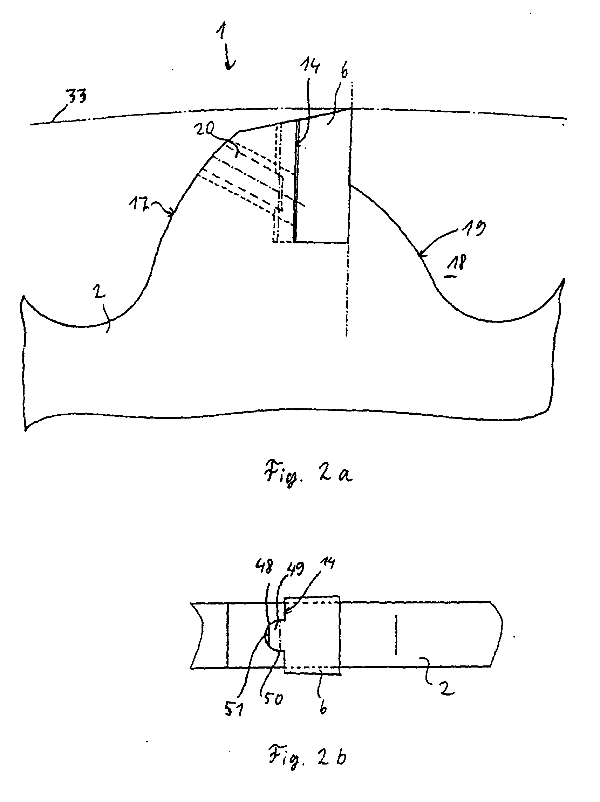

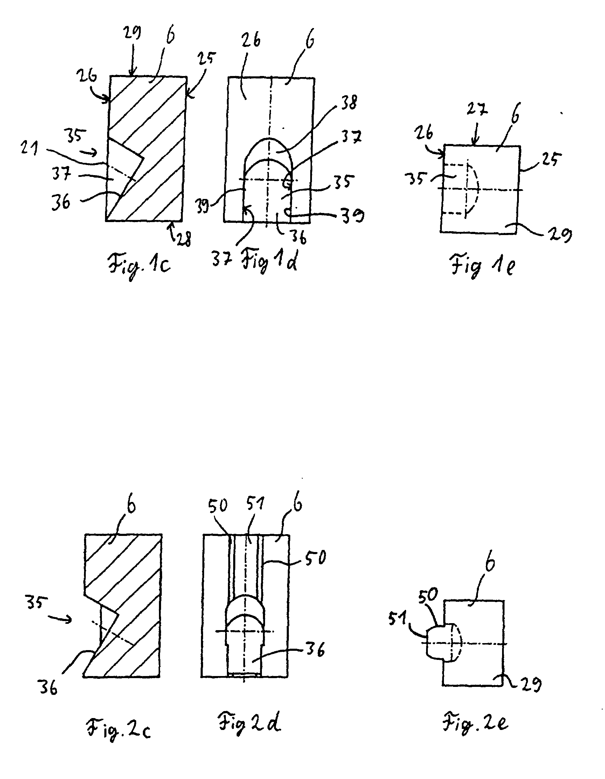

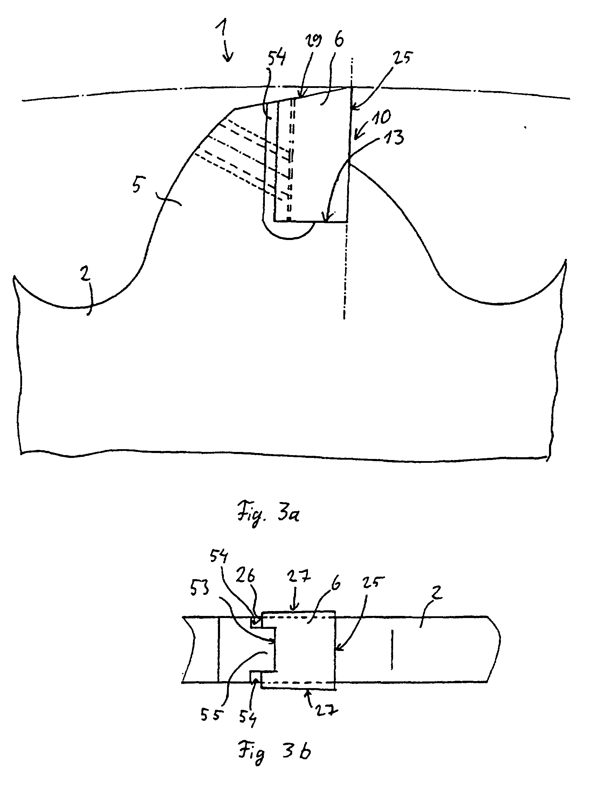

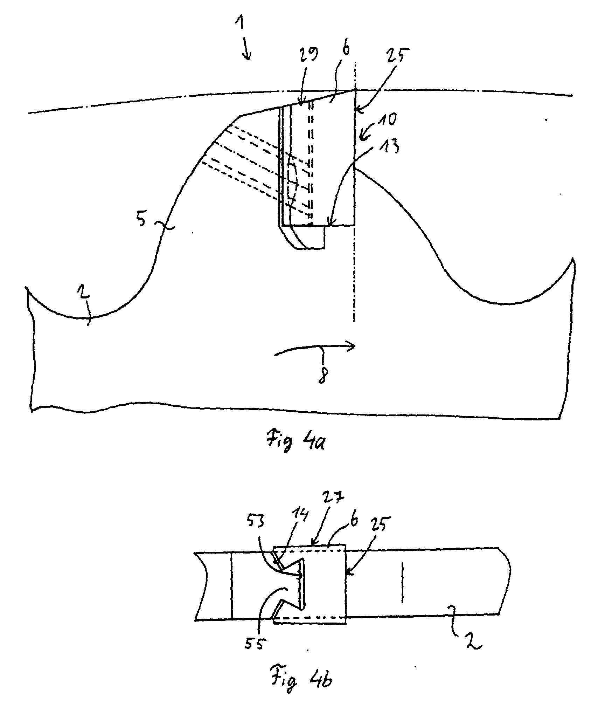

Beim Sägeblatt 1 nach dem zweiten Ausführungsbeispiel (Fig. 2a - 2e) ist an der Rückengegenfläche 14 der Ausnehmung 10 mittig eine radial verlaufende Kreisnut 48 eingebracht. An der Rückenfläche 26 ist ein zur Kreisnut 48 korrespondierend geformter, sich in Radialrichtung erstreckender Führungssteg 49 ausgebildet. Der Führungssteg 49 weist in der Draufsicht kreisbogenförmige Seitenwandungen 50 und eine abgeflachte Stirnfläche 51 auf. Der Führungssteg 49 lagert etwa formschlüssig in der Kreisnut 48. Diese Ineingriffnahme zwischen dem Führungssteg 49 und der Kreisnut 48 legt die axiale Lage bezüglich des Sägeblattes 1 des Schneideinsatzes 6 eindeutig fest. Hierdurch wird somit der Axialsitz des Schneideinsatzes 6 an dem Stammblatt 2 festgelegt.

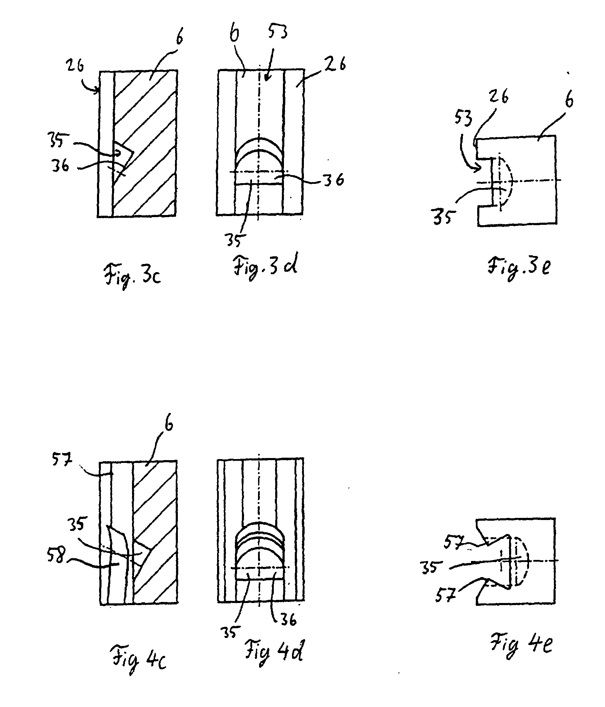

Das dritte Ausführungsbeispiel des erfindungsgemäßen Sägeblattes 1 (Fig. 3a bis 3e) weist einen Schneideinsatz 6 mit einer in der Draufsicht U-förmigen und insbesondere rechteckförmigen Nut 53 im Bereich der Rückenfläche 26 auf. Die Nut 53 ist quermittig an der Rückenfläche 26 angeordnet und erstreckt sich in Radialrichtung. An der Sägezahnbasis 5 sind angrenzend an der Rückengegenfläche 14 die Seitenwandungen ausgespart, so daß durch die sich hierbei bildenden Aussparungen 54 ein in Radialrichtung verlaufender, etwa formschlüssig in die Nut 53 passender Führungssteg 55 ausgebildet ist. Die Aussparungen 54 sind aus fertigungstechnischen Gründen bis in den Bereich unterhalb der Bodenfläche 13 der Ausnehmung 10 verlängert. Durch das Eingreifen des Führungssteges 55 in die Nut 53 des Schneideinsatzes 6 wird dessen Radialsitz am Sägeblatt 1 festgelegt.

Ein viertes Ausführungsbeispiel des erfindungsgemäßen Sägeblattes 1 (Fig. 4a bis 4e) weist wie das dritte Ausführungsbeispiel eine Führungsnut 53 an der Rückenfläche 26 und einen Führungssteg 55 an der Rückengegenfläche 14 auf. Die Führungsnut 53 und der Führungssteg 55 weisen in der Draufsicht eine Schwalbenschwanzform auf, so daß durch ein etwa formschlüssiges Eingreifen des Führungssteges 55 in die Führungsnut 53 sowohl der Axialsitz des Schneideinsatzes 6 am Sägeblatt 1 festgelegt ist, als auch eine Festlegung des Schneideinsatzes 6 in Drehrichtung 8 erfolgt. Die Aussparung 35 schneidet zwei nach innen in die Nut 53 vorstehende Flanken 57 der Schwalbenschwanznut 53, wodurch sich eine gewölbte Schnittkante 58 (Fig. 4c) ergibt.

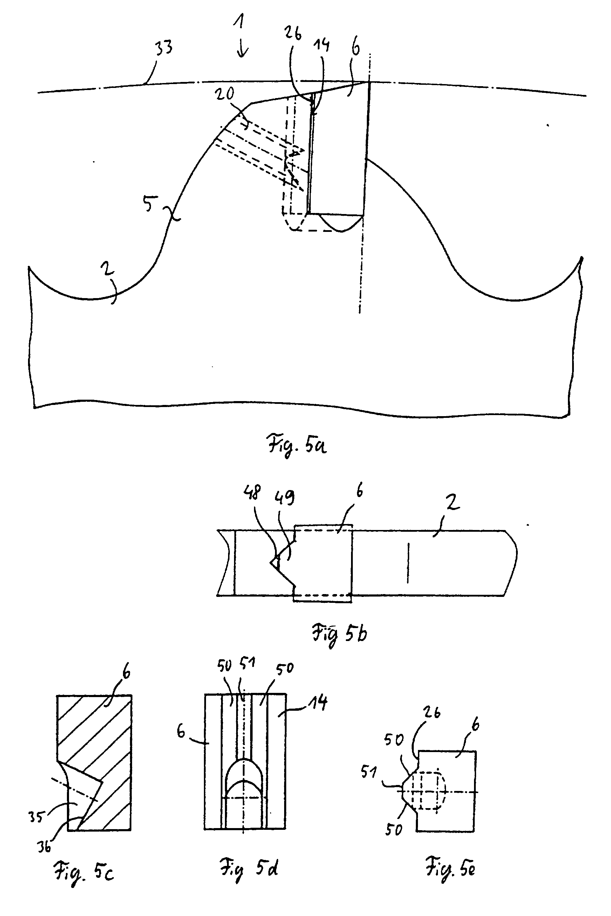

In einem fünften Ausführungsbeispiel ist an der Rückengegenfläche 14 der Ausnehmung 10 eine in Radialrichtung verlaufende Führungsnut 48 mit in der Draufsicht (Fig. 5b) dreiecksförmig Querschnitt ausgebildet. Der Schneideinsatz 6 weist an seiner Rückenfläche 26 einen korrespondierenden Führungssteg 49 auf, der in der Draufsicht etwa dreiecksförmig mit zwei Seitenwandungen 50 und einer abgeflachten Stirnfläche 51 ausgebildet ist und formschlüssig in die Führungsnut 48 paßt. Das Eingreifen des Führungssteges 49 in die Führungsnut 48 legt den Axialsitz des Schneideinsatzes 6 im Sägeblatt 1 fest.

Gemäß einem sechsten Ausführungsbeispiel des erfindungsgemäßen Sägeblatts 1 ist die Rückengegenfläche 14 der Ausnehmung 10 in der Draufsicht etwa dreiecksförmig mit zwei Seitenflanken 58 und einer abgeflachten Stirnfläche 59 ausgebildet. Die Rückenfläche 26 des Schneideinsatzes 6 ist mit einer korrespondierenden, in der Draufsicht etwa dreiecksförmigen Aussparung 60 mit zwei Flanken 61 ausgebildet.

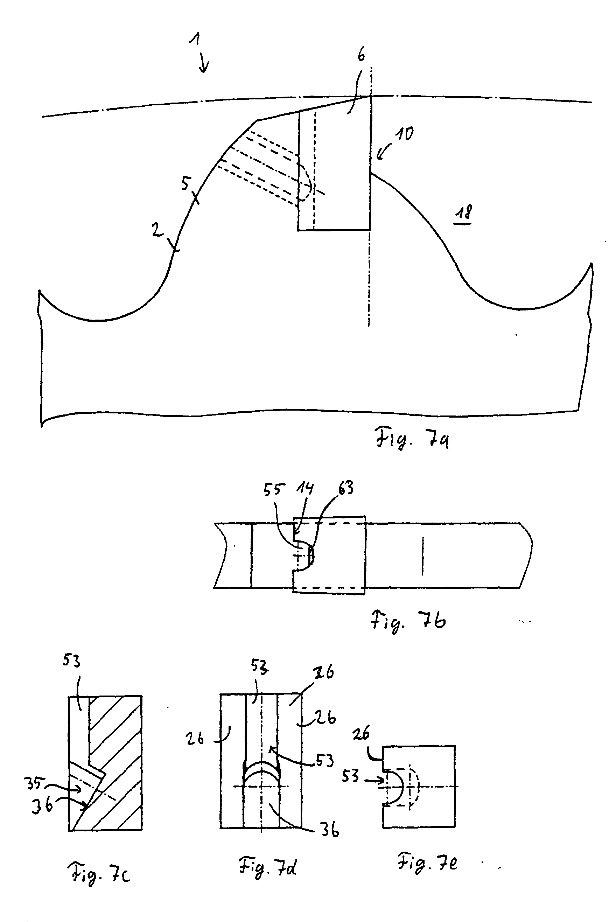

Das siebte Ausführungsbeispiel des erfindungsgemäßen Sägeblattes 1 (Fig. 7a bis 7e) weist an der Rückenfläche 26 des Schneideinsatzes 6 eine Führungsnut 53 mit in einer Draufsicht halbkreisförmigen Querschnitt auf. Die Führungsnut 53 ist quermittig an der Rückenfläche 26 angeordnet und erstreckt sich in Radialrichtung. Korrespondierend zur Führungsnut 53 ist an der Führungsgegenfläche 14 der Ausnehmung 10 ein Führungssteg 55 mit in der Draufsicht etwa halbkreisförmigen Querschnitt und einer abgeflachten Stirnfläche 63 ausgebildet. Das Eingreifen des Führungssteges 55 in die Führungsnut 53 legt den Axialsitz des Schneideinsatzes 6 des Sägeblattes 1 fest.

Das achte Ausführungsbeispiel des erfindungsgemäßen Sägeblattes 1 weist die gleiche Raumform wie das dritte Ausführungsbeispiel auf; der Schneideinsatz 6 ist an seiner Rückenfläche 26 mit einer in Querschnitt rechteckförmigen Führungsnut 53 versehen, die in Radialrichtung quermittig an der Rückenfläche 26 angeordnet und durch zwei seitliche Stege 65 begrenzt ist. An der Rükkengegenfläche 14 ist ein korrespondierender Führungssteg 55 durch zwei Aussparungen 54 ausgebildet. In die Zahnflanke 16 ist eine Bohrung 66 eingebracht, die das Stammblatt 2 in Axialrichtung des Sägeblattes 1 durchsetzt und mit ihrem Randbereich im Führungssteg 55 angeordnet ist. Die Bohrung 66 befindet sich etwa auf Höhe der Lagerfläche 12 und dient zur Aufnahme eines Spannmittels wie z. B. einer Niete, einer Schraube oder eines Spannstiftes, mit welchem der Schneideinsatz 6 gegen die Lagerfläche 12 spannbar ist. An den Stegen 65 können deshalb zur Bohrung 66 korrespondierende kreisbogenförmige Ausnehmungen 67 vorgesehen sein, in welche das Spannmittel zur Festlegung des Radialsitzes eingreift.

## Patentansprüche

1. Sägeblatt zum Trennen von Stahl, Nichteisenmetallen oder Holz und Kunststoffen mit einem Stammblatt (2), an dem an der Peripherie radial nach außen vorstehende Sägezähne (3) angeordnet sind, die jeweils aus einer Sägezahnbasis (5) und einem Schneideinsatz (6) ausgebildet sind, wobei in der Sägezahnbasis (5) eine seitlich jeweils offene Ausnehmung (10) mit einer in Drehrichtung (8) voreilenden Lagerfläche (12) und einer nacheilenden Rückengegenfläche (14) sowie eine Bodenfläche (13) eingebracht ist, und
der Schneideinsatz (6) mit einer in Drehrichtung (8) voreilenden Brustfläche (25) an der Lagerfläche (12) anliegend und mit einer Rückenfläche (26) zur Rückengegenfläche (14) weisend angeordnet ist, wobei
eine Spanneinrichtung vorgesehen ist, die den Schneideinsatz (6) gegen die Lagerfläche (12) drückt,
**dadurch gekennzeichnet,**
**daß** zwischen der Rückenfläche (26) und der Rückengegenfläche (14) ein Dämpfungsspalt (45) ausgebildet ist.

2. Sägeblatt nach Anspruch 1,
**dadurch gekennzeichnet,**
**daß** die Spanneinrichtung den Schneideinsatz (6) auch gegen die Bodenfläche (13) drückt.

3. Sägeblatt nach Anspruch 1 und/oder 2,
**dadurch gekennzeichnet,**
**daß** die Sägezahnbasis (5) einteilig am Stammblatt (2) radial nach außen vorstehend angeformt ist und in der Seitenansicht in etwa die Form eines konvex gewölbten Höckers aufweist.

4. Sägeblatt nach Anspruch 3,
**dadurch gekennzeichnet,**
**daß** der zur Ausnehmung (10) nacheilende Bereich der Sägezahnbasis (5) eine Zahnflanke (16) mit einer vorzugsweise konvex gewölbten Zahnflankenbegrenzungskante (17) bildet, wobei in der Zahnflanke (16) zur Ausbildung der Spanneinrichtung eine sich von der Zahnflankenbegrenzungskante (17) erstreckende und in der Ausnehmunge (10) mündende Gewindebohrung (20) eingebracht ist, wobei die Gewindebohrung (20) in Drehrichtung (8) nach radial innen geneigt ist, so daß eine Längsmittelachse (21) der Bohrung (20) mit einer Senkrechten (22) zur Rückengegenfläche (14) einen Winkel (α) einschließt, der z.B. im Bereich von etwa 10° bis 40° liegt.

5. Sägeblatt nach Anspruch 4,
**dadurch gekennzeichnet,**
**daß** der Winkel (α) im Bereich von 20° bis 30° liegt.

6. Sägeblatt nach einem oder mehreren der Ansprüche 1 bis 5,
**dadurch gekennzeichnet,**
**daß** die Ausnehmung (10) nutartig U-förmig ausgebildet in einer voreilenden Hälfte der Basis (5) des Sägeblatts (1) angeordnet ist.

7. Sägeblatt nach einem oder mehreren der vorhergehenden Ansprüche, **dadurch gekennzeichnet,**
**daß** die Lagerfläche (12) und die Rückengegenfläche (14) am Sägeblatt (1) etwa in Radialrichtung angeordnet sind und senkrecht auf einer Bodenfläche (13) stehen, wobei an dem
der Rückengegenfläche (14) nacheilenden Bereich die Sägezahnbasis (5) eine Zahnflanke (16) mit einer konvex gewölbten Zahnflankenbegrenzungskante (17) bildet.

8. Sägeblatt nach einem oder mehreren der Ansprüche 3 bis 7,
**dadurch gekennzeichnet,**
**daß** an dem von der Lagerfläche (12) voreilenden Bereich die Sägezahnbasis (5) zur Ausbildung eines Spanraums (18) weniger weit nach radial außen vorstehend als die Zahnflanke (16) ausgebildet ist, wodurch beispielsweise die radiale Längserstreckung der Lagerfläche (12) etwa halb so groß wie die radiale Längserstreckung der Rückengegenfläche (14) ist.

9. Sägeblatt nach einem oder mehreren vorhergehenden Ansprüche, **dadurch gekennzeichnet,**
**daß** der von der Lagerfläche (12) voreilende Bereich eine konvex in Drehrichtung (8) nach radial innen gewölbte Spanraumbegrenzungskante (19) aufweist.

10. Sägeblatt nach einem oder mehreren vorhergehenden Ansprüche, **dadurch gekennzeichnet,**
**daß** der Schneideinsatz (6) ein etwa quaderförmiger Körper mit der in Drehrichtung (8) voreilenden Brustfläche (25) der nacheilenden Rückenfläche (26), zwei Seitenflächen (27), einer Bodenfläche (28) und einem zur Bodenfläche (28) gegenüberliegend angeordneten Schneidrücken (29) ist.

11. Sägeblatt nach Anspruch 10, **dadurch gekennzeichnet,**
**daß** die Brustfläche (25) im Bereich des Schneidrückens (29) und der Seitenflächen (27) hinterschliffen ist, wobei die Kante zwischen der Brustfläche bzw. Frontfläche (25) und dem Schneidrücken (29) eine Hauptschneide (30) und die Kanten zwischen der Brustfläche (25) und den Seitenflächen (22) Nebenschneiden (31) bilden.

12. Sägeblatt nach Anspruch 10 und/oder 11, **dadurch gekennzeichnet,**
**daß** der Schneideinsatz (6) derart in der Ausnehmung (10) der Sägezahnbasis (5) eingesetzt ist, daß er mit seiner Bodenfläche (28) auf der Bodenfläche (13) der Ausnehmung (10) aufliegt, wobei die Hauptschneide (30) an der Sägezahnbasis (5) und am Schneideinsatz (6) nach radial außen vorsteht.

13. Sägeblatt nach einem oder mehreren der Ansprüche 10 bis 12,
**dadurch gekennzeichnet,**
**daß** an der Rückenfläche (26) gegenüberliegend zu einer Gewindebohrung (20) in der Sägezahnbasis (5) eine Aussparung (35) eingebracht ist, wobei die Aussparung (35) einen ebenflächigen Aussparungsgrund (36) und eine Seitenwandung (37) aufweist.

14. Sägeblatt nach Anspruch 13,
**dadurch gekennzeichnet,**
**daß** der Aussparungsgrund (36) in etwa senkrecht zur Längsmittenachse (21) der Gewindebohrung (20) angeordnet ist, und die Seitenwandung (37) mit einem halbkreisförmigen Bogen (38) und zwei sich vertikal daran anschließenden Flanken (39) ausgebildet ist.

15. Sägeblatt nach einem oder mehreren vorhergehenden Ansprüche,
**dadurch gekennzeichnet,**
**daß** als Spanneinrichtung zur Fixierung des Schneideinsatzes (6) in der Ausnehmung (10) ein Schraubbolzen (40) in eine Gewindebohrung (20) eingeschraubt ist, die in einem der Ausnehmung (10) nacheilenden Bereich, der Sägezahnflanke (16), eingebracht ist.

16. Sägeblatt nach Anspruch 15,
**dadurch gekennzeichnet,**
**daß** der Schraubbolzen (40) eine vordere und rückwärtige Stirnfläche (41, 42) aufweist, wobei in der rückwärtigen Stirnfläche (42) eine Ausnehmung (43) zur Ineingriffnahme mit einem Werkzeug eingebracht ist und die vordere Stirnfläche (41) am Aussparungsgrund (36) mit Vorspannung anliegt, so daß der Schraubbolzen (40) den Schneideinsatz (6) in Drehrichtung (8) gegen die Lagerfläche (12) drückt.

17. Sägeblatt nach einem oder mehreren vorhergehenden Ansprüche,
**dadurch gekennzeichnet,**
**daß** der Schneideinsatz (6) aus Hochleistungsarbeitsstahl, Vergütungsstahl, Hartmetall, Keramik o.ä. ausgebildet ist.

18. Sägeblatt nach einem oder mehreren vorhergehenden Ansprüche,
**dadurch gekennzeichnet,**
**daß** der Schneideinsatz an seiner Oberfläche mit einem Hartstoff beschichtet ist.

19. Sägeblatt nach Anspruch 18,
**dadurch gekennzeichnet,**
**daß** der Schneideinsatz mit Hartmetall, Diamant, kubischem Bornitrid, Keramik oder Hochleistungsschnellarbeitsstahl beschichtet ist.

20. Sägeblatt nach einem oder mehreren vorhergehenden Ansprüche,
**dadurch gekennzeichnet,**
**daß** der Schneideinsatz durch eine Wärmebehandlung thermisch vergütet ist.

21. Sägeblatt nach einem oder mehreren vorhergehenden Ansprüche,
**dadurch gekennzeichnet,**
**daß** der Schneideinsatz in einem CVD-Verfahren beschichtet ist.

## Claims

1. A saw blade for cutting steel, non-ferrous metals or wood and plastics, having a main blade (2) on which radially outwardly projecting saw teeth (3) are arranged on the periphery and are each constructed from a saw tooth base (5) and a cutting insert (6),
with a laterally respectively open cutout (10) having a leading bearing face (12), as seen in the direction of rotation (8), and a trailing back counterface (14) and a base face (13) being made in the saw tooth base (5), and
with the cutting insert (6) being arranged to abut against the bearing face (12) by means of a leading front face (25), as seen in the direction of rotation (8), and being arranged pointing towards the back counterface (14) by means of a back face (26), with a clamping device which presses the cutting insert (6) against the bearing face (12) being provided,
**characterised in that** between the back face (26) and the back counterface (14) there is made a damping gap (45).

2. A saw blade according to Claim 1, **characterised in that** the damping device presses the cutting insert (6) against the base face (13) as well.

3. A saw blade according to Claim 1 and/or 2, **characterised in that** the saw tooth base (5) is integrally formed in one piece with the main blade (2), projecting radially outward, and in side view has approximately the shape of a convexly curved hump.

4. A saw blade according to Claim 3, **characterised in that** the region of the saw tooth base (5) which trails the cutout (10) forms a tooth flank (16) with a preferably convexly curved tooth flank delimiting edge (17), with a threaded bore (20) extending from the tooth flank delimiting edge (17) and opening into the cutout (10) being made in the tooth flank (16) in order to form the clamping device, with the threaded bore (20) being inclined radially inward in the direction of rotation (8) so that a longitudinal centre axis (21) of the bore (20) forms with a normal (22) to the back counterface (14) an angle (α) which lies for example in the range from approximately 10° to 40°.

5. A saw blade according to Claim 4, **characterised in that** the angle (α) lies in the range from 20° to 30°.

6. A saw blade according to one or more of Claims 1 to 5, **characterised in that** the cutout (10) is arranged in a leading half of the base (5) of the saw blade (1), and is constructed in a U shape in the manner of a groove.

7. A saw blade according to one or more of the preceding claims, **characterised in that** the bearing face (12) and the back counterface (14) are arranged on the saw blade (1) approximately in the radial direction and stand perpendicular to a base face (13), with the saw tooth base (5) forming a tooth flank (16) with a convexly curved tooth flank delimiting edge (17) at a region trailing the back counterface (14).

8. A saw blade according to one or more of Claims 3 to 7, **characterised in that**, at the region leading the bearing face (12), the saw tooth base (5) is formed projecting radially outward less far than the tooth flank (16) in order to form a chip space (18), as a result of which for example the radial longitudinal extent of the bearing face (12) is approximately half the size of the radial longitudinal extent of the back counterface (14).

9. A saw blade according to one or more of the preceding claims, **characterised in that** the region leading the bearing face (12) has a chip space delimiting edge (19) which is curved convexly radially inward as seen in the direction of rotation (8).

10. A saw blade according to one or more of the preceding claims, **characterised in that** the cutting insert (6) is an approximately cuboid body having the leading front face (25), as seen in the direction of rotation (8), the trailing back face (26), two side faces (27), a base face (28) and a cutter back (29) arranged opposite the base face (28).

11. A saw blade according to Claim 10, **characterised in that** the front face (25) is relief-ground in the region of the cutter back (29) and the side faces (27), with the edge between the front face or fore face (25) and the cutter back (29) forming a primary cutter (30) and the edges between the front face (25) and the side faces (22) forming secondary cutters (31).

12. A saw blade according to Claim 10 and/or 11, **characterised in that** the cutting insert (6) is inserted in the cutout (10) of the saw tooth base (5) such that it bears by means of its base face (28) on the base face (13) of the cutout (10), with the primary cutter (30) projecting radially outwards at the saw tooth base (5) and the cutting insert (6).

13. A saw blade according to one or more of Claims 10 to 12, **characterised in that** a hollow (35) is made in the saw tooth base (5), opposite a threaded bore (20) in the back face (26), with the hollow (35) having a planar base (36) to the hollow and a side wall (37).

14. A saw blade according to Claim 13, **characterised in that** the base (36) to the hollow is arranged approximately perpendicular to the longitudinal centre axis (21) of the threaded bore (20), and the side wall (37) is formed with a semicircular arc (38) and two flanks (39) vertically adjoining the latter.

15. A saw blade according to one or more of the preceding claims, **characterised in that** as the clamping device for fixing the cutting insert (6) in the cutout (10) a screw bolt (40) is screwed into a threaded bore (20) which is made in a region trailing the cutout (10), the saw tooth flank (16).

16. A saw blade according to Claim 15, **characterised in that** the screw bolt (40) has a front and a rear end face (41, 42), with a cutout (43) being made in the rear end face (42) to engage with a tool, and the front end face (41) abutting with pretension against the base (36) to the hollow so that the screw bolt (40) presses the cutting insert (6) against the bearing face (12) in the direction of rotation (8).

17. A saw blade according to one or more of the preceding claims, **characterised in that** the cutting insert (6) is made from heavy-duty high-speed steel, hardened steel, hard metal, ceramic or similar.

18. A saw blade according to one or more of the preceding claims, **characterised in that** the cutting insert is coated on its surface with a hard material.

19. A saw blade according to Claim 18, **characterised in that** the cutting insert is coated with hard metal, diamond, cubic boron nitride, ceramic or heavy-duty high-speed steel.

20. A saw blade according to one or more of the preceding claims, **characterised in that** the cutting insert is heat-hardened by a heat treatment.

21. A saw blade according to one or more of the preceding claims, **characterised in that** the cutting insert is coated in a CVD procedure.

## Revendications

1. Lame de scie pour la coupe de l'acier, des métaux non ferreux ou du bois et des matières plastiques, comprenant une lame de base (2) sur laquelle sont disposées, le long de la périphérie, des dents de scie (3) en saillie radialement vers l'extérieur, qui sont composées chacune d'une base (5) de dent de scie et d'un élément rapporté de coupe (6), lame dans laquelle, dans la base (5) de dent de scie, est ménagé un évidement (10) s'ouvrant latéralement et possédant une surface d'appui (12) placée en avant dans le sens de la rotation (8) et une contre-surface de dos (14) placée en arrière, ainsi qu'une surface de fond (13), et dans laquelle l'élément rapporté de coupe (6) est disposée en appui contre la surface d'appui (12) par une surface d'attaque (25) qui est en avant dans le sens de la rotation (8) et de façon à pointer vers la contre-surface de dos (14) par une surface de dos (26), et dans laquelle il est prévu un dispositif de serrage qui presse l'élément rapporté de coupe (6) contre la surface d'appui (12),
**caractérisée en ce qu'**une fente d'amortissement (45) est formée entre la surface de dos (26) et la contre-surface de dos (14).

2. Lame de scie selon la revendication 1,
**caractérisée en ce que** le dispositif de serrage presse également l'élément rapporté de coupe (6) contre la surface de fond (13).

3. Lame de scie selon la revendication 1 et/ou 2,
**caractérisée en ce que** la base (5) de dent de scie est formée en une seule pièce, sur la plaque de base (2), en saillie radialement vers l'extérieur et qu'en vue de côté, elle présente à peu près la forme d'une bosse incurvée avec une forme convexe.

4. Lame de scie selon la revendication 3,
**caractérisée en ce que** la région de la base (5) de dent de scie qui est en position arrière par rapport à l'évidement (10) forme un flanc de dent (16) présentant un bord (17) de limitation du flanc de dent de préférence incurvé avec une forme convexe, cependant que, dans le flanc de dent (16), est ménagé, pour former le dispositif de serrage, un perçage fileté (20) qui part du bord (17) de limitation du flanc de dent et débouche dans l'évidement (10), le perçage fileté (20) étant incliné radialement vers l'intérieur, dans le sens de la rotation (8), de manière qu'un axe médian longitudinal (21) du perçage (20) forme avec une perpendiculaire (22) à la contre-surface de dos (14), un angle (α) qui est, par exemple, dans l'intervalle d'environ 10 ° à 40 °.

5. Lame de scie selon la revendication 4,
**caractérisée en ce que** l'angle (α) est dans l'intervalle de 20 ° à 30 °.

6. Lame de scie selon une ou plusieurs des revendications 1 à 5,
**caractérisée en ce que** l'évidement (10) réalisé en forme de U à la façon d'une rainure, est disposé dans une moitié avant de la base (5) de la lame de scie (1).

7. Lame de scie selon une ou plusieurs des revendications précédentes,
**caractérisée en ce que** la surface d'appui (12) et la contre-surface de dos (14) sont prévues sur la lame de scie (1) à peu près dans une direction radiale et sont perpendiculaires à une surface de fond (13), cependant que, dans la région qui est en arrière de la contre-surface de dos (14), la base (5) de la dent de scie forme un flanc de dent (16) présentant un bord (18) de limitation du flanc de dent qui est incurvé avec une forme convexe.

8. Lame de scie selon une ou plusieurs des revendications précédentes 3 à 7,
**caractérisée en ce qu'**au droit de la région avant de la surface d'appui (12), la base (5) de la dent de scie est en saillie moins loin radialement vers l'extérieur que le flanc (16) de la dent, afin de former une chambre à copeaux, de sorte que, par exemple, la dimension longitudinale radiale de la surface (12) est à peu près égale à la moitié de la dimension longitudinale radiale de la contre-surface de dos (14).

9. Lame de scie selon une ou plusieurs des revendications précédentes,
**caractérisée en ce que** la région qui est en avant de la surface d'appui (12) présente un bord (19) de limitation de la chambre à copeaux qui est incurvée avec une forme convexe radialement vers l'intérieur dans le sens de la rotation (8).

10. Lame de scie selon une ou plusieurs des revendications précédentes,
**caractérisée en ce que** l'élément rapporté de coupe (6) est un corps à peu près parallélépipédique présentant la surface d'attaque (25) en avant dans le sens de la rotation (8) par rapport à la surface de dos (26) placée en arrière, avec deux surfaces latérales (27), une surface de fond (28) et une face en dépouille (29) disposée à l'opposé de la surface de fond (28).

11. Lame de scie selon la revendication 10,
**caractérisée en ce que** la surface d'attaque (25) est détalonnée à la meule dans la région de la face en dépouille (29) et des surfaces latérales (27), l'arête formée entre la surface d'attaque ou surface frontale (25) et la face en dépouille (29) formant alors un tranchant principal (30) et les arêtes formées entre la surface d'attaque (25) et les surfaces latérales (22) formant des tranchants secondaires (31).

12. Lame de scie selon la revendication 10 et/ou 11,
**caractérisée en ce que** l'élément rapporté de coupe (6) est encastrée dans l'évidement (10) de la base (5) de la dent de scie de telle manière qu'elle s'appuie par sa surface de fond (28) sur la surface de fond (13) de l'évidement (10), le tranchant principal (30) étant en saillie radialement vers l'extérieur au droit de la base (5) de la dent de scie et de l'élément rapporté de coupe (6).

13. Lame de scie selon une ou plusieurs des revendications 10 à 12,
**caractérisée en ce qu'**un évidement (35) est ménagé dans la surface de dos (26) en face d'un perçage fileté (20) formé dans la base (5) de la dent de scie, l'évidement (35) présentant un fond d'évidement (36) à surface plane et une paroi latérale (37).

14. Lame de scie selon la revendication 13,
**caractérisée en ce que** le fond (36) de l'évidement est disposé à peu près perpendiculairement à l'axe médian longitudinal (21) du perçage fileté (20) et la paroi latérale (37) est formée avec un arc semi-circulaire (38) et deux flancs (39) qui s'y raccordent perpendiculairement.

15. Lame de scie selon une ou plusieurs des revendications précédentes,
**caractérisée en ce qu'**en tant que dispositif de serrage destiné au blocage de l'élément rapporté de coupe (6) dans l'évidement (10), une vis (40) est vissée dans un perçage fileté (20) qui est ménagé dans une région du flanc (16) de la dent de scie qui est en arrière par rapport à l'évidement (10).

16. Lame de scie selon la revendication 15,
**caractérisée en ce que** la vis (40) présente une surface frontale avant et une surface frontale arrière (41, 42), un creux (43) étant ménagé dans la surface frontale arrière (42) pour l'attaquer au moyen d'un outil, et la surface frontale avant (41) étant appuyée avec précontrainte contre le fond (36) de l'évidement, de telle manière que la vis (40) presse l'élément rapporté de coupe (6) contre la surface d'appui (12) dans le sens de la rotation (8).

17. Lame de scie selon une ou plusieurs des revendications précédentes,
**caractérisée en ce que** l'élément rapporté de coupe (6) est réalisé en acier à outillage à hautes performances, en acier trempé, en métal dur, en céramique ou analogue.

18. Lame de scie selon une ou plusieurs des revendications précédentes,
**caractérisée en ce que** l'élément rapporté de coupe est revêtu d'une substance à haute résistance mécanique sur sa surface.

19. Lame de scie selon la revendication 18,
**caractérisée en ce que** l'élément rapporté de coupe est revêtu de métal dur, de diamant, de nitrure de bore cubique, d'une céramique ou d'un acier d'outillage rapide à hautes performances.

20. Lame de scie selon une ou plusieurs des revendications précédentes,
**caractérisée en ce que** l'élément rapporté de coupe est amélioré thermiquement par un traitement thermique.

21. Lame de scie selon une ou plusieurs des revendications précédentes,
**caractérisée en ce que** l'élément rapporté de coupe est revêtu par un procédé CVD.
